# EUROPEAN PATENT APPLICATION

(11) **EP 4 108 607 A1**
(43) Date of publication of application: **28.12.2022**
(21) Application number: 22180148.3
(22) Date of filing: 21.06.2022
(51) Int. Cl.: B65G 47/54, B65G 47/64

(54) **PRODUCT TRANSPORTATION SYSTEM WITH PRODUCT PRESENTATION DEVICE**

(30) Priority: 23.06.2021 US 202163214035 P
(71) Applicant: QC Conveyors, Batavia, OH 45103 (US)
(72) Inventor: SELLERS, Orlando, Batavia, Ohio, 45103 (US); BERARDINIS, Chris, Batavia, Ohio, 45103 (US); RUSCHAU, Jerry, Batavia, Ohio, 45103 (US); NELSON, Nick, Batavia, Ohio, 45103 (US); BROWN, Charlie, Batavia, Ohio, 45103 (US); STINE, Todd, Batavia, Ohio, 45103 (US); ZIEGLER, Sarah, Batavia, Ohio, 45103 (US); WILHELM, Dave, Batavia, Ohio, 45103 (US); MEYER, Mandi, Batavia, Ohio, 45103 (US); KEW, Kevin, Batavia, Ohio, 45103 (US); FISHER, Brandon, Batavia, Ohio, 45103 (US); ELLINGTON, Joshua, Batavia, Ohio, 45103 (US); BUCKINGHAM, Mike, Batavia, Ohio, 45103 (US)
(74) Representative: Carpmaels & Ransford LLP

(57) **Abstract**

A product transportation system () includes a product input assembly (12), a product staging assembly (14), and a product output assembly (16). The product input assembly includes a first platform (26) and a motorized actuator (32) that form a loading location (30) dimensioned to receive a product (P). The motorized actuator can drive the product away from the loading location. The product staging assembly is interposed between the product input assembly and the product output assembly and may receive the produce being driven away form the motorized actuator. The product output assembly includes a product presentation device (110) having a second platform (130) and a drive carriage (150). The second platform may receive the product from the product staging assembly while the drive carriage can translate relative to the product staging assembly to drive the second platform relative to the first platform between a retracted position and an extended position.

## Description

### PRIORITY

This application claims priority to U.S. Provisional Application No. 63/214,035, entitled "Product Transportation System with Product Presentation Device," filed June 23, 2021.

### BACKGROUND

In some commercial establishments, it may be desirable to automatically transport a product from a loading location to a delivery location during a commercial transaction. For example, it may be desirable to permit the product to be deposited at the loading location, transport the product from the loading location to the delivery location with little or no human intervention, and present the product to a customer for retrieval at the delivery location. Such automatic transportation may increase the speed and efficiency of the commercial transaction, thereby improving customer satisfaction.

While product transportation systems have been made and used, it is believed that no one prior to the inventors has made or used the invention described in the appended claims.

### BRIEF DESCRIPTION OF THE DRAWINGS

The accompanying drawings, which are incorporated in and constitute a part of this specification, illustrate embodiments of the invention, and, together with the general description of the invention given above, and the detailed description of the embodiments given below, serve to explain the principles of the present invention.
FIG. 1 depicts a front perspective view of an exemplary product transportation system having a product input assembly, a product staging assembly, and a product output assembly with an exemplary product presentation device, showing transportation of a product therealong;
FIG. 2 depicts a front perspective view of the product output assembly of FIG. 1, showing the product transferred from a driven belt conveyor of the product staging assembly to a driven roller conveyor of the product output assembly;
FIG. 3 depicts a front perspective view of the product presentation device of the product output assembly of FIG. 1;
FIG. 4A depicts a front elevation view of the product output assembly of FIG. 1, showing the product presentation device of the product output assembly in a retracted state; and
FIG. 4B depicts a front elevation view of the product output assembly of FIG. 1, showing the product presentation device of the product output assembly in an extended state.

The drawings are not intended to be limiting in any way, and it is contemplated that various embodiments of the invention may be carried out in a variety of other ways, including those not necessarily depicted in the drawings. The accompanying drawings incorporated in and forming a part of the specification illustrate several aspects of the present invention, and together with the description serve to explain the principles of the invention; it being understood, however, that this invention is not limited to the precise arrangements shown.

### DETAILED DESCRIPTION

The following description of certain examples of the invention should not be used to limit the scope of the present invention. Other examples, features, aspects, embodiments, and advantages of the invention will become apparent to those skilled in the art from the following description, which is by way of illustration, one of the best modes contemplated for carrying out the invention. As will be realized, the invention is capable of other different and obvious aspects, all without departing from the invention. Accordingly, the drawings and descriptions should be regarded as illustrative in nature and not restrictive.

For clarity of disclosure, to the extent that spatial terms such as "top," "bottom," "upper," "lower," "righthand," "lefthand," "vertical," "horizontal," "clockwise," "counterclockwise," or the like are used herein with reference to the drawings, it will be appreciated that such terms are used for exemplary description purposes only and are not intended to be limiting or absolute.

Furthermore, the terms "about," "approximately," and the like as used herein in connection with any numerical values or ranges of values are intended to encompass the exact value(s) referenced as well as a suitable tolerance that enables the referenced feature or combination of features to function for the intended purpose described herein.

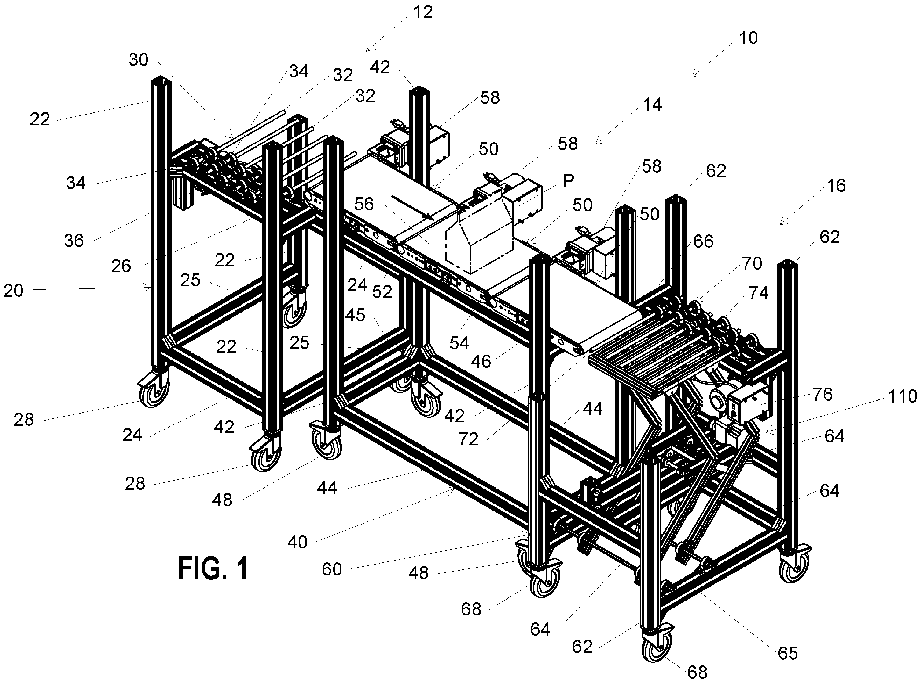

FIGS. 1-4B depict an exemplary product transportation system (10) including a product input assembly (12), a product staging assembly (14), and a product output assembly (16) configured to cooperate with each other to transport a product (P) from a loading location to a delivery location.

As shown in FIG. 1, product input assembly (12) of the present version includes a first frame (20) having a plurality of vertical corner posts (22) spaced apart from each other in a generally rectangular arrangement. Posts (22) are fixedly coupled to each other by a plurality of horizontal support beams (24, 25) including a pair of longitudinal support beams (24) parallel to each other and a pair of transverse support beams (25) parallel to each other and orthogonal to the pair of longitudinal support beams (24). Posts (22) and beams (24, 25) may be of any suitable size and shape. While four vertical posts (22) and four horizontal beams (24, 25) are shown, it will be appreciated that any suitable number of posts (22) and/or beams (24, 25) may be used. In the example shown, first frame (20) also includes an upper platform (26) fixedly coupled to an adjacent pair of posts (22) on a lefthand side of product input assembly (12) and extending horizontally therefrom toward the opposing adjacent pair of posts (22) on a righthand side of product input assembly (12). Each post (22) may be supported at or near its lower end by a corresponding caster (28) such that product input assembly (12) may be movable across a floor (F) of a commercial establishment. In some versions, one or more casters (28) may be lockable for selectively fixing product input assembly (12) at a predetermined location on the floor (F). It will be appreciated that first frame (20) may be configured in any other manner suitable for supporting the remaining components of product input assembly (12).

Product input assembly (12) further includes a driven roller conveyor (30) having a plurality of transverse driven rollers (32) rotatably mounted to platform (26) via corresponding pairs of bearings (e.g., ball bearings) (34) and extending horizontally therefrom at a uniform height and parallel to each other toward a righthand side of product input assembly (12), such that each roller (32) is cantilevered from the respective pair of bearings (34). Each roller (32) is configured to rotate about its own axis for facilitating transportation of product (P) positioned thereon in a transportation direction that is generally orthogonal to rollers (32). For example, clockwise rotation of rollers (32) (e.g., when viewed from a lefthand side of product input assembly (12)) may cause the product (P) to translate over rollers (32) downstream toward product staging assembly (14). In this regard, each roller (32) is operatively coupled to a common motor (36) that is configured to selectively actuate and/or arrest rotation of rollers (32) together (e.g., simultaneously), such as via corresponding sprockets and chains (not shown).

In the example shown, rollers (32) are spaced apart from each other by a uniform clearance gap which may be substantially less than a horizontal dimension of the product (P) to permit transfer of the product (P) from an upstream roller (32) to an adjacent downstream roller (32) while inhibiting the product (P) from falling therebetween. While six rollers (32) are shown, it will be appreciated that any suitable number of rollers (32) may be used. In any event, at least a portion of driven roller conveyor (30), such as one or more upstream rollers (32) thereof, may define the loading location of transportation system (10) at which the product (P) may be deposited (e.g., manually by a human operator or automatically by an upstream conveyance system).

With continuing reference to FIG. 1, product staging assembly (14) of the present version includes a second frame (40) having a plurality of vertical corner posts (42) spaced apart from each other in a generally rectangular arrangement. Posts (42) are fixedly coupled to each other by a plurality of horizontal support beams (44, 45) including a pair of longitudinal support beams (44) parallel to each other and a pair of transverse support beams (45) parallel to each other and orthogonal to the pair of longitudinal support beams (24). Posts (42) and beams (44, 45) may be of any suitable size and shape. While four vertical posts (42) and four horizontal beams (44, 45) are shown, it will be appreciated that any suitable number of posts (42) and/or beams (44, 45) may be used. In the example shown, second frame (40) also includes an upper platform (46) fixedly coupled to upper portions of posts (42) and extending horizontally therebetween. Each post (42) may be supported at or near its lower end by a corresponding caster (48) such that product staging assembly (14) may be movable across the floor (F). In some versions, one or more casters (48) may be lockable for selectively fixing product staging assembly (14) at a predetermined location on the floor (F). It will be appreciated that second frame (40) may be configured in any other manner suitable for supporting the remaining components of product staging assembly (14). In some versions, second frame (40) may be fixedly coupled to first frame (20) to maintain product staging assembly (14) at a predetermined location relative to product input assembly (12).

Product staging assembly (14) further includes a plurality of driven belt conveyors (50) each having a transverse drive pulley (also referred to as a drum or roller) (52) and a transverse idler pulley (also referred to as a drum or roller) (54) rotatably mounted to platform (46) and extending horizontally at a uniform height and parallel to each other between righthand and lefthand sides of product staging assembly (14), with the drive pulley (52) and idler pulley (54) of each driven belt conveyor (50) supporting a corresponding continuous or endless loop belt (56). Each pulley (52, 54) is configured to rotate about its own axis for facilitating rotation of the corresponding belt (56) and thus transportation of product (P) positioned thereon in a transportation direction that is generally orthogonal to pulleys (52, 54). For example, clockwise rotation of drive pulleys (52) (e.g., when viewed from a lefthand side of product staging assembly (14)) may cause clockwise rotation of the corresponding belt (56) such that an upper conveying surface of belt (56) translates together with the product (P) atop belt (56) downstream toward product output assembly (16). In this regard, drive pulleys (52) may be operatively coupled to corresponding dedicated motors (58) that are configured to selectively actuate and/or arrest rotation of drive pulleys (52) independently of each other, such as via direct coupling of each drive pulley (52) to an output shaft (not shown) of the corresponding motor (58).

In the example shown, the belt (56) of the upstream-most driven belt conveyor (50) is spaced apart from the downstream-most roller (32) of driven roller conveyor (30) by a clearance gap which may be substantially less than a horizontal dimension of the product (P) to permit transfer of the product (P) from the downstream-most roller (32) to the belt (56) of the upstream-most driven belt conveyor (50) while inhibiting the product (P) from falling therebetween. Similarly, the belts (56) of driven belt conveyors (50) are spaced apart from each other by a uniform clearance gap which may be substantially less than a horizontal dimension of the product (P) to permit transfer of the product (P) from the belt (56) of an upstream driven belt conveyor (50) to the belt (56) of an adjacent downstream driven belt conveyor (50) while inhibiting the product (P) from falling therebetween. In the version shown, pulleys (52, 54) are each parallel to rollers (32) in a horizontal plane such that the transportation direction remains constant (e.g., longitudinal) between product input assembly (12) and product staging assembly (14). Alternatively, pulleys (52, 54) may be oriented relative to rollers (32) and/or relative to each other at any suitable angle(s) in a horizontal plane such that the transportation direction may be varied between product input assembly (12) and product staging assembly (14). While three driven belt conveyors (50) are shown, it will be appreciated that any suitable number of driven belt conveyors (50) may be used. In any event, product staging assembly (14) may permit any number of products (P) to be queued along respective driven belt conveyors (50) in a coordinated manner for subsequent transfer to product output assembly (16).

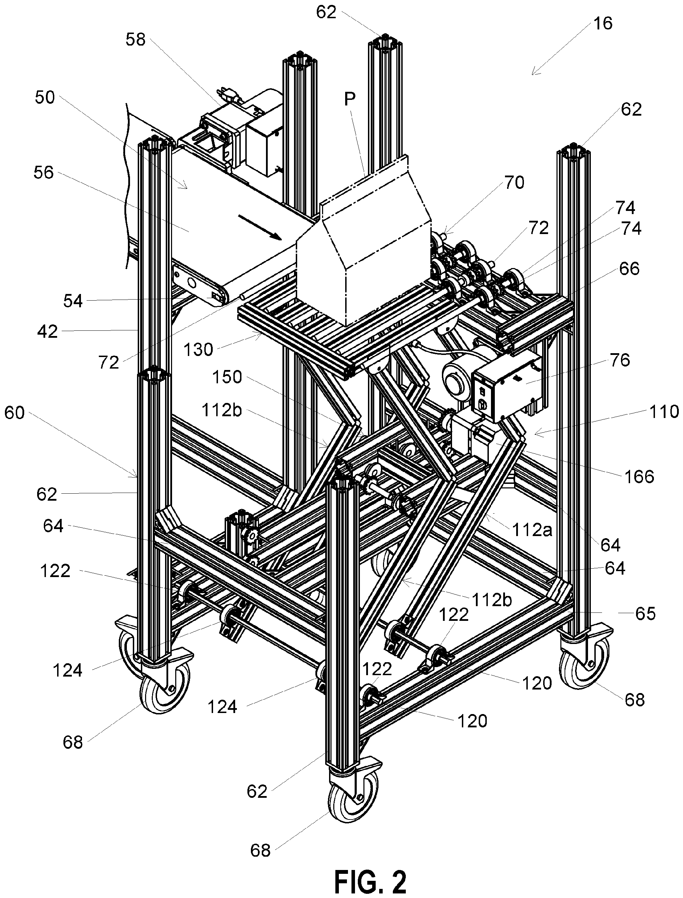

As best shown in FIG. 2, product output assembly (16) of the present version includes a third frame (60) having a plurality of vertical corner posts (62) spaced apart from each other in a generally rectangular arrangement. Posts (62) are fixedly coupled to each other by a plurality of horizontal support beams (64, 65) including three longitudinal support beams (64) parallel to each other and a pair of transverse support beams (65) parallel to each other and orthogonal to longitudinal support beams (64). Posts (62) and beams (64, 65) may be of any suitable size and shape. While four vertical posts (62) and five horizontal beams (64, 65) are shown, it will be appreciated that any suitable number of posts (62) and/or beams (64, 65) may be used. In the example shown, third frame (60) also includes an upper platform (66) fixedly coupled to an adjacent pair of posts (62) on a righthand side of product output assembly (16) and extending horizontally therefrom toward the opposing adjacent pair of posts (62) on a lefthand side of product output assembly (16). Each post (62) may be supported at or near its lower end by a corresponding caster (68) such that product output assembly (16) may be movable across the floor (F). In some versions, one or more casters (68) may be lockable for selectively fixing product output assembly (16) at a predetermined location on the floor (F). It will be appreciated that third frame (60) may be configured in any other manner suitable for supporting the remaining components of product output assembly (16). In some versions, third frame (60) may be fixedly coupled to second frame (40) to maintain product output assembly (16) at a predetermined location relative to product staging assembly (14).

Product output assembly (16) further includes a driven roller conveyor (70) having a plurality of transverse driven rollers (72) rotatably mounted to platform (66) via corresponding pairs of bearings (e.g., ball bearings) (74) and extending horizontally therefrom at a uniform height and parallel to each other toward a lefthand side of product output assembly (16) such that each roller (72) is cantilevered from the respective pair of bearings (74). Each roller (72) is configured to rotate about its own axis for facilitating transportation of product (P) positioned thereon in a transportation direction that is generally orthogonal to rollers (72). For example, clockwise rotation of rollers (72) (e.g., when viewed from a lefthand side of product output assembly (16)) may cause the product (P) to translate over rollers (72) downstream away from product staging assembly (14). In this regard, each roller (72) is operatively coupled to a common motor (76) that is configured to selectively actuate and/or arrest rotation of rollers (72) together (e.g., simultaneously), such as via corresponding sprockets and chains (not shown).

In the example shown, the upstream-most roller (72) is spaced apart from the belt (56) of the downstream-most driven belt conveyor (50) by a clearance gap which may be substantially less than a horizontal dimension of the product (P) to permit transfer of the product (P) from the belt (56) of the downstream-most driven belt conveyor (50) to the upstream-most roller (72) while inhibiting the product (P) from falling therebetween. Similarly, rollers (72) are spaced apart from each other by a uniform clearance gap which may be substantially less than a horizontal dimension of the product (P) to permit transfer of the product (P) from an upstream roller (72) to an adjacent downstream roller (72) while inhibiting the product (P) from falling therebetween. In the version shown, rollers (72) are each parallel to pulleys (52, 54) in a horizontal plane such that the transportation direction remains constant (e.g., longitudinal) between product staging assembly (14) and product output assembly (16). Alternatively, rollers (72) may be oriented relative to pulleys (52, 54) at any suitable angle in a horizontal plane such that the transportation direction may be varied between product staging assembly (14) and product output assembly (16). While six rollers (72) are shown, it will be appreciated that any suitable number of rollers (72) may be used.

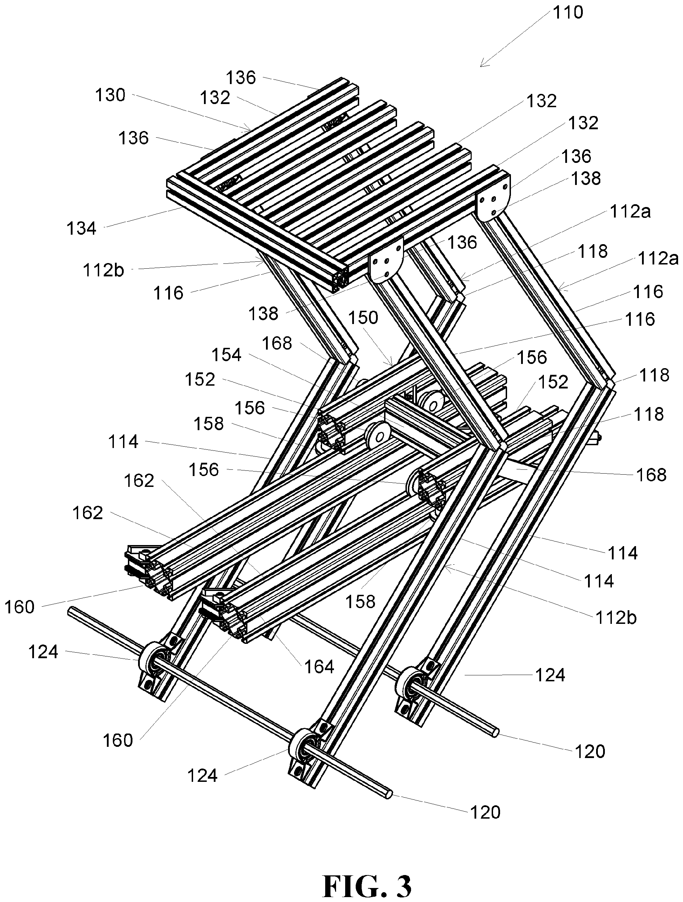

Product output assembly (16) of the present version also includes a presentation device (110). As best shown in FIG. 3, presentation device (110) includes a plurality of articulation arms (112a, 112b) spaced apart from each other in a generally rectangular arrangement and arranged in a pair of righthand arms (112a) and a pair of lefthand arms (112b). Each arm (112a, 112b) includes a lower arm portion (114) and an upper arm portion (116) fixedly coupled to each other by at least one respective elbow bracket (118). In this regard, each upper arm portion (116) is oriented relative to the corresponding lower arm portion (114) at a predetermined angle in a vertical plane such that each arm (112a, 112b) has a generally V-shaped profile. For example, the predetermined angle may be substantially equal to or greater than approximately 90°.

In the example shown, the pair of righthand arms (112a) and the pair of lefthand arms (112b) are pivotably coupled to transverse beams (65) on front and rear sides of product output assembly (16) via corresponding longitudinal shafts (120). More particularly, shafts (120) each extend generally orthogonally between transverse beams (65) and are each rotatably mounted thereto via corresponding pairs of outer bearings (e.g., ball bearings) (122), and lower arm portions (114) of arms (112a, 112b) are each rotatably mounted at or near their lower ends to the corresponding shaft (120) via corresponding inner bearings (e.g., ball bearings) (124). In this manner, each pair of arms (112a, 112b) is configured to articulate about the axis of the corresponding shaft (120), as described in greater detail below.

Presentation device (110) also includes a grate (130) carried by arms (112a, 112b) and having a plurality of transverse support bars (132) fixedly coupled to each other at their respective ends by a longitudinal support bar (134), such that each transverse support bar (132) is cantilevered from longitudinal support bar (134). In the example shown, transverse support bars (132) are spaced apart from each other by a uniform clearance gap which may be substantially greater than a width of each roller (72) to permit rollers (72) to be received between adjacent pairs of transverse support bars (132). Likewise, each transverse support bar (132) may have a width substantially less than the uniform clearance gap of rollers (72) to permit support bars (132) to be received between adjacent pairs of rollers (72). In this manner, grate (130) may be capable of being horizontally nested within driven roller conveyor (70) without colliding therewith. While five transverse support bars (132) are shown, it will be appreciated that any suitable number of transverse support bars (132) may be used.

In the example shown, grate (130) is pivotably coupled to each arm (112a, 112b) via corresponding hinge plates (136) and hinge pins (138). More particularly, hinge plates (136) are each fixedly coupled to grate (130) (e.g., at the upstream-most and downstream-most transverse support bars (132)) and hinge pins (138) each extend through a corresponding hinge plate (136) and an upper end of the corresponding upper arm portion (116). It will be appreciated that the pivotable coupling of grate (130) to each arm (112a, 112b) may permit grate (130) to maintain a substantially horizontal orientation during articulation of arms (112a, 112b), as described in greater detail below.

Presentation device (110) further includes a drive carriage (150) configured to selectively translate transversely for actuating articulation of arms (112a, 112b) and having a pair of transverse chassis portions (152) fixedly coupled to each other at or near their midpoints by a longitudinal chassis portion (154). In the example shown, a pair of vertically-oriented wheels (156) (e.g., having axes extending longitudinally) and a pair of horizontally-oriented wheels (158) (e.g., having axes extending vertically) are rotatably coupled to each transverse chassis portion (152) for translatably coupling drive carriage (150) to a pair of transverse rails (160). In this regard, rails (160) each extend generally orthogonally between an opposing pair of beams (64) and are each fixedly coupled thereto. Rails (160) each include at least one vertical groove (162) extending along its length for receiving the corresponding vertically-oriented wheels (156) and at least one horizontal groove (164) extending along its length for receiving the corresponding horizontally-oriented wheels (158), such that wheels (156, 158) and grooves (162, 164) may cooperate with each other to permit and guide translation of drive carriage (150) transversely along rails (160) while restricting other types of relative motion between drive carriage (150) and rails (160) to inhibit inadvertent dislodgement of drive carriage (150) from rails (160). In this regard, drive carriage (150) is operatively coupled to a motor (166) that is configured to selectively actuate and/or arrest leftward and/or rightward translation of drive carriage (150), such as via corresponding sprockets and chains (not shown).

In the example shown, drive carriage (150) is pivotably coupled to each righthand arm (112a) via corresponding joint plates (168) and pairs of hinge pins (not shown). More particularly, one hinge pin of each pair extends through one end of a corresponding joint plate (168) and a middle portion of the corresponding transverse chassis portion (152), and the other hinge pin of each pair extends through the other end of the corresponding joint plate (168) and a mid-upper portion of the corresponding lower arm portion (114). It will be appreciated that the pivotable coupling of drive carriage (150) to each righthand arm (112a) may permit the transverse translation of drive carriage (150) to be converted into articulation of the righthand arms (112a) about the axis of the corresponding shaft (120), and that the pivotable coupling of grate (130) to each arm (112a, 112b) may permit such articulation of the righthand arms (112a) to in turn be converted into articulation of the lefthand arms (112b) about the axis of the corresponding shaft (120). It will also be appreciated that such contemporaneous articulation of both the righthand and lefthand arms (112a, 112b) may cause movement of grate (130) along a curved (e.g., arcuate) path in both transverse and vertical directions while maintaining grate (130) in a substantially horizontal orientation.

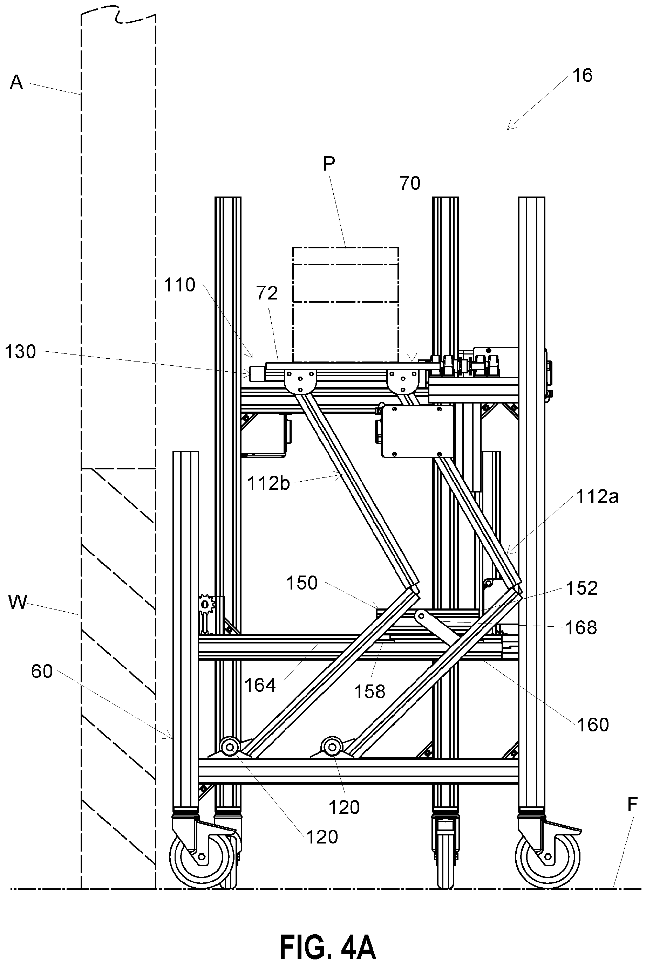

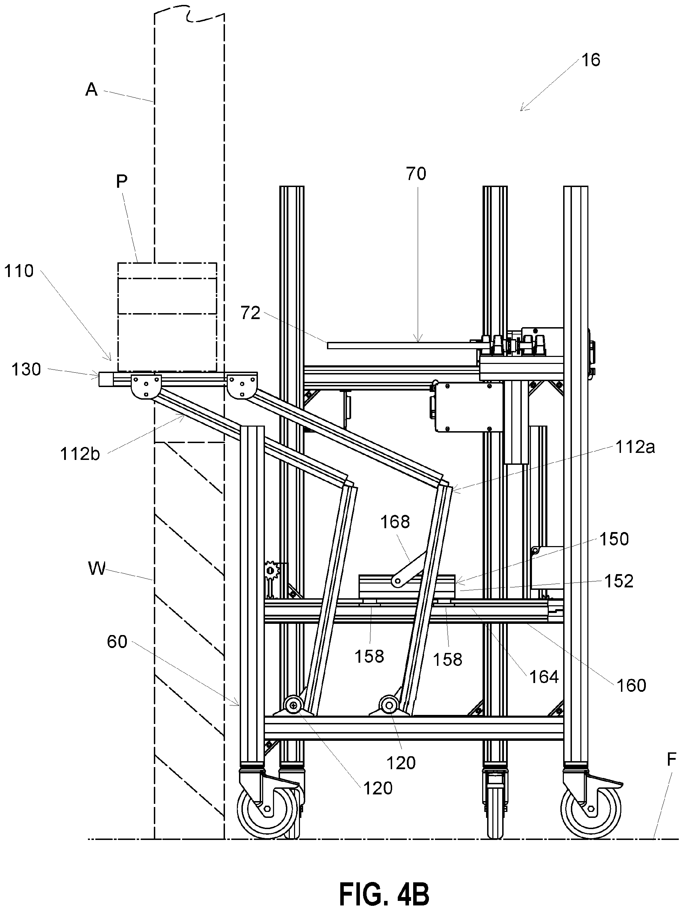

Referring now to FIGS. 4A-4B, product presentation device (110) of product output assembly (16) may be movable between a retracted state (FIG. 4A) and an extended state (FIG. 4B) via selective articulation of arms (112a, 112b) as actuated by drive carriage (150). In the example shown, product output assembly (16) is positioned alongside a wall (W) of the commercial establishment with product presentation device (110) generally aligned transversely with an aperture (A) provided above wall (W).

As shown in FIG. 4A, drive carriage (150) may initially be in a righthand drive carriage position, with joint plates (168) oriented rightwardly and downwardly toward the corresponding righthand arms (112a), thereby allowing product presentation device (110) to assume its retracted state. When product presentation device (110) is in the retracted state, product presentation device (110) resides within a horizontal footprint of frame (60) with grate (130) in a first grate position at which grate (130) is horizontally nested within driven roller conveyor (70), such that product presentation device (110) may permit a window (not shown) to close off aperture (A). In the example shown, the upper surface of grate (130) is at least slightly below the upper surfaces of rollers (72) when grate (130) is in the first grate position to prevent grate (130) from interfering with the transfer of the product (P) from the belt (56) of the downstream-most driven belt conveyor (50) to the upstream-most roller (72) or the transfer of the product (P) from upstream rollers (72) to adjacent downstream rollers (72).

Drive carriage (150) may subsequently be translated transversely from the righthand drive carriage position toward a lefthand drive carriage position to actuate counterclockwise articulation of arms (112a, 112b) (e.g., when viewed from a front side of product output assembly (16)), with joint plates (168) rotating counterclockwise. During such articulation, the curved path along which grate (130) is moved may cause grate (130) to be at least momentarily elevated relative to the first grate position such that the upper surface of grate (130) is at least slightly above the upper surfaces of rollers (72) to permit grate (130) to lift the product (P) off of driven roller conveyor (70) for facilitating presentation of the product (P) to a customer through aperture (A) atop grate (130).

As shown in FIG. 4B, drive carriage (150) may ultimately reach the lefthand drive carriage position, with joint plates (168) oriented rightwardly and upwardly toward the corresponding righthand arms (112a), thereby allowing product presentation device (110) to assume its extended state. When product presentation device (110) is in the extended state, at least a portion of product presentation device (110) resides outside the horizontal footprint of frame (60) with grate (130) in a second grate position at which grate (130) is transversely (e.g., leftwardly) spaced apart from driven roller conveyor (70), such that grate (130) may at least partially extend through aperture (A) above wall (W) for presenting the product (P) to the customer for retrieval. Thus, when grate (130) is in the second grate position, at least a portion of grate (130) may define the delivery location of transportation system (10) at which the product (P) may be retrieved by the customer.

Drive carriage (150) may subsequently be translated transversely from the lefthand drive carriage position to the righthand drive carriage position to actuate clockwise articulation of arms (112a, 112b) (e.g., when viewed from a front side of product output assembly (16)), with joint plates (168) rotating clockwise, thereby allowing product presentation device (110) to resume its retracted state. Product presentation device (110) may be cyclically moved between its retracted and extended states for sequentially lifting any number of products (P) from driven roller conveyor (70) and presenting such products (P) to any number of customers through aperture (A) while permitting aperture (A) to be closed off by the window between consecutive product presentations.

In some versions, any one or more of motors (36, 58, 76, 166) may be in operative communication with a controller, such as a programmable logic controller (not shown), for receiving command signals therefrom. For example, such a controller may be configured to send command signals to motors (36, 58, 76, 166) for selectively activating and/or deactivating each motor (36, 58, 76, 166) in a synchronized or otherwise coordinated manner to regulate transportation of one or more product(s) (P) from the loading location to the delivery location.

It should be understood that any one or more of the teachings, expressions, embodiments, examples, etc. described herein may be combined with any one or more of the other teachings, expressions, embodiments, examples, etc. that are described herein. The above-described teachings, expressions, embodiments, examples, etc. should therefore not be viewed in isolation relative to each other. Various suitable ways in which the teachings herein may be combined will be readily apparent to those of ordinary skill in the art in view of the teachings herein. Such modifications and variations are intended to be included within the scope of the claims.

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein will only be incorporated to the extent that no conflict arises between that incorporated material and the existing disclosure material.

Having shown and described various embodiments of the present invention, further adaptations of the methods and systems described herein may be accomplished by appropriate modifications by one of ordinary skill in the art without departing from the scope of the present invention. Several of such potential modifications have been mentioned, and others will be apparent to those skilled in the art. For instance, the examples, embodiments, geometries, materials, dimensions, ratios, steps, and the like discussed above are illustrative and are not required. Accordingly, the scope of the present invention should be considered in terms of the following claims and is understood not to be limited to the details of structure and operation shown and described in the specification and drawings.

## Claims

1. A product transportation system, comprising:
(a) a product input assembly (12) comprising:
(i) a first platform (26), and
(ii) a motorized actuator (32) associated with the first platform (26) to form a loading location (30) dimensioned to receive a product, wherein the motorized actuator (32) is configured to drive the product away from the loading location (30);
(b) a product staging assembly (14) configured to receive the product being driven away from the motorized actuator (32); and
(c) a product output assembly (16) comprising a product presentation device (110), wherein the product staging assembly (14) is interposed between the product input assembly (12) and the product output assembly (16), wherein the product presentation device (110) comprises:
(i) a second platform (130) configured to receive the product from the product staging assembly (14), and
(ii) a drive carriage (150) configured to translate relative to the product staging assembly (14) to thereby drive the second platform (130) relative to the first platform (26) between a retracted position and an extended position.

2. The product transportation system of claim 1, wherein the product presentation device (110) further comprises a driven roller conveyor (70) mounted to the second platform (130).

3. The product transportation system of claim 2, wherein the driven roller conveyor (70) is configured to actuate the product relative to the second platform (130).

4. The product transportation system of claim 2 or 3, wherein the driven roller conveyor (70) comprises a plurality of driven rollers (72).

5. The product transportation system of claim 4, wherein the second platform (130) comprises a grate (130) having a plurality of transverse support bars (132), wherein a respective driven roller (72) of the plurality of driven rollers (72) is interposed between the plurality of transverse support bars (132).

6. The product transportation system of any preceding claim, wherein the product presentation device further comprises a pair of articulation arms (112a, 112b) attached to the second platform (130) and a base structure (65) of the product output assembly (16).

7. The product transportation system of claim 6, wherein the pair of articulation arms (112a, 112b) are pivotally coupled to the base structure (65) via ball bearings (122) and a longitudinal shaft (120).

8. The product transportation system of claim 6 or 7, wherein the second platform (130) is pivotally coupled to the pair of articulation arms (112a, 112b).

9. The product transportation system of claim 6, 7 or 8, wherein the drive carriage (150) is configured to pivot the pair of articulation arms (112a, 112b) such that the second platform (130) actuates between the retracted position and the extended position.

10. The product transportation system of any preceding claim, wherein the drive carriage (150) comprises a pair of transverse chassis portions (152) and a longitudinal chassis portion (154), wherein the longitudinal chassis portion (154) fixedly couples the pair of transverse chassis portions (152) together.

11. The product transportation system of claim 10, wherein the pair of transverse chassis portions (152) each comprise a pair of wheels (156) which are coupled to a respective guide rail (160) of the product output assembly (16).

12. The product transportation system of claim 11, wherein each guide rail (160) of the respective guide rails (160) defines a vertical groove (162), wherein the pair of wheels (156) are at least partially contained within the respective vertical groove (162).

13. The product transportation system of any preceding claim, further comprising a motor (166) configured to actuate the drive carriage (150).

14. The product transportation system of claim 13, wherein the motor (166) is mounted to the product output assembly (16).

15. The product transportation system of claim 13 or 14, further comprising a second motor (58) operatively coupled to the motorized actuator (32).
